# EUROPÄISCHE PATENTSCHRIFT

(11) **EP 3 922 867 B1**
(45) Veröffentlichungstag und Bekanntmachung des Hinweises auf die Patenterteilung: **27.09.2023**
(21) Anmeldenummer: 21178468.1
(22) Anmeldetag: 09.06.2021
(51) Int. Cl.: F16B 7/10, F16B 21/06, F16F 9/54

(54) **LÄNGENVERSTELLBARES AGGREGAT MIT EINEM ANSCHLUSSELEMENT, VERFAHREN ZUR HERSTELLUNG DES AGGREGATS**
ADJUSTABLE LENGTH UNIT WITH A CONNECTING ELEMENT, METHOD FOR MANUFACTURING THE UNIT
UNITÉ RÉGLABLE EN LONGUEUR DOTÉE D'UN ÉLÉMENT DE CONNEXION, PROCÉDÉ DE FABRICATION DE L'UNITÉ

(30) Priorität: 09.06.2020 DE 102020115326
(43) Veröffentlichungstag der Anmeldung: 15.12.2021
(73) Patentinhaber: STABILUS GmbH, 56070 Koblenz (DE)
(72) Erfinder: Keßler, Jonathan, 56412 Großholbach (DE)
(74) Vertreter: Bernsmann, Falk

(56) Entgegenhaltungen:
- EP-B1- 2 311 672
- DE-A1- 10 046 961
- DE-A1-102012 201 174

## Beschreibung

### Technisches Gebiet

Die Erfindung betrifft ein längenverstellbares Aggregat mit einem Anschlusselement zum zugbelastbaren und druckbelastbaren Anschluss des Aggregats an ein Bauteil, wobei das Anschlusselement entlang der Längsachse auf einen axialen Endabschnitt bezüglich der Längsachse des Aggregats aufgesteckt ist. Die Erfindung betrifft weiterhin ein Verfahren zur Herstellung eines derartigen Aggregats.

Derartige Aggregate mit entsprechenden Anschlusselementen kommen beispielsweise in Form von Spindelantrieben / Linearantrieben, Federbeinen, Fluiddämpfern und Gasdruckfedern insbesondere im Kraftfahrzeugbereich z. B. zum Öffnen, Halten und / oder Schließen von Heckklappen, Türen, Motorhauben etc. zum Einsatz.

### Stand der Technik

Aus DE 10 2012 201 174 A1 ist ein Aggregat der eingangs genannten Art bekannt. Das längenveränderbare Aggregat umfasst ein äußeres Bauteil, das von einem Außenrohr gebildet ist. An einem Montageende des Außenrohrs ist ein Anschlusselement angeordnet. Ein Aufsatz des Rohrs weist eine umlaufende Nut (zwischen einer Hutkrempe und einer Gegenringfläche) auf, in die ein umlaufender Steg (zwischen Ringfläche und Hutkrempe) eingreift, um das Anschlusselement drehbar an dem Rohr zu halten. Das Anschlusselement kann durch einen in einer Umfangsnut des Rohrs und einer Umfangsnut des Anschlusselements angeordneten Sprengring drehbar an dem Rohr gehalten sein. Diese Lösung führt jedoch zu einem komplizierten und langen Herstellungsverfahren und ist daher nicht zufriedenstellend.

### Technische Aufgabe

Die Aufgabe der Erfindung ist es, ein Aggregat der eingangs genannten Art bereit zu stellen, das eine einfache und schnelle Montage mit einer stabilen Verbindung ermöglicht.

### Technische Lösung

Der Gegenstand der vorliegenden Erfindung stellt ein Aggregat gemäß Anspruch 1 bereit, das die technische Aufgabe löst. Außerdem wird die Aufgabe durch ein Verfahren gemäß Anspruch 10 gelöst. Vorteilhafte Ausgestaltungen ergeben sich aus den abhängigen Ansprüchen.

Ein erfindungsgemäßes Anschlusselement ist zum zugbelastbaren und druckbelastbaren Anschluss eines entlang einer Längsachse längenverstellbaren Aggregats, einer Gasdruckfeder, eines Fluiddämpfers, eines Linearantriebs, eines Spindelantriebs oder eines Federbeins, an ein Bauteil, beispielsweise eine Karosserie oder eine Klappe eines Fahrzeugs, ausgelegt.

Das Anschlusselement ist dazu ausgelegt, entlang der Längsachse auf einen axialen Endabschnitt bezüglich der Längsachse des Aggregats aufgesteckt zu werden. Der Endabschnitt kann beispielsweise rohrförmig, insbesondere zylindrisch und/oder koaxial zur Längsachse ausgestaltet sein.

Das Anschlusselement umfasst zumindest einen in einer Montagekonfiguration des Anschlusselements zum Aufstecken auf den Endabschnitt bezüglich der Längsachse nach außen elastisch biegsamen Rastarm, wobei der zumindest eine Rastarm zumindest ein Rastelement umfasst, wobei das zumindest eine Rastelement dazu ausgelegt ist, mit zumindest einem zu dem Rastelement komplementär geformten Gegenrastelement des Endabschnitts in einem auf den Endabschnitt aufgesteckten Betriebszustand des Anschlusselements entlang der Längsachse formschlüssig zusammenzuwirken.

Die Verwendung von Rastelementen und Gegenrastelementen erlaubt eine deutlich einfachere Montage des Anschlusselements. Der oder die Rastarm(e) sind dabei so ausgestaltet, dass sie in der Montagekonfiguration radial nach außen (in Bezug auf die Längsachse) elastisch verformbar sind um in das / die Gegenrastelement(e) zu einzurasten. Der oder die Rastarm(e) und / oder Rastelement(e) können weiter so ausgestaltet sein, dass sie in der Betriebskonfiguration nicht radial nach außen (in Bezug auf die Längsachse) elastisch verformbar sind um mit dem / den Gegenrastelement(en) (formschlüssig) verrastet zu bleiben. Die Betriebskonfiguration kann beispielsweise durch ein weiteres nach dem Einrasten montiertes Bauteil erreicht werden.

Das Anschlusselement ist vorzugsweise mit den typischen Kräften eines Klappenantriebs eines Fahrzeugs zugbelastbar und druckbelastbar.

Das Anschlusselement kann 1, 2, 3, 4, 5, 6 oder mehr, vorzugsweise zumindest 2, insbesondere 4 Rastarme mit je mindestens einem Rastelement umfassen. Je mehr Rastarme verwendet werden, desto leichter ist das Anschlusselement auf das Aggregat aufzustecken und umso gleichmäßiger wird es gehalten. Allerdings erhöht sich auch der Herstellungsaufwand und die Bruchgefahr der Rastarme, weshalb sich die Verwendung von 4 Rastarmen als ein guter Kompromiss herausgestellt hat.

Das Aggregat muss nicht dieselbe Anzahl an Gegenrastelementen aufweisen, wie das Anschlusselement Rastelemente aufweist, sondern es können auch mehrere, insbesondere alle, Rastelemente mit einem gemeinsamen Gegenrastelement (z. B. mit einer um die Längsachse laufenden Ringnut) verrastet werden oder umgekehrt.

Die Biegsamkeit des Rastarms (der Rastarme) in Radialrichtung sollte ausreichend groß sein, so dass ein Aufschieben des Anschlusselements auf den Endabschnitt des Aggregats eine möglichst geringe Bruchgefahr mit sich bringt. Vorzugsweise ist der mindestens eine Rastarm um mindestens 1 mm, vorzugsweise um mindestens 10 mm, radial (also senkrecht zur Längsachse) elastisch verformbar. Vorzugsweise ist der mindestens eine Rastarm um mindestens die radiale Dicke des mindestens einen Rastelements radial (also senkrecht zur Längsachse) elastisch verformbar. Die radiale Dicke des Rastelements ist dabei beispielsweise die Länge, um die das Rastelement im nicht verformtem Zustand des Rastarms radial vom Rastarm (insbesondere nach innen zur Längsachse) vorsteht. Da das Rastelement nicht unbedingt am axialen Ende des Rastarms angeordnet ist, kann eine deutlich höhere elastische Verformbarkeit des Rastarms (z. B. 1,5-mal bis 2-mal so weit radial nach außen) als die radiale Dicke des Rastelements notwendig sein.

Das erfindungsgemäße Anschlusselement ist damit einfach und unkompliziert auf dem Aggregat zu montieren, und es wird dennoch eine gegenüber einer Zugbelastung oder Druckbelastung entlang der Längsachse äußerst stabile Verbindung des Anschlusselements mit dem Aggregat erreicht.

### Beschreibung der Ausführungsarten

In einer bevorzugten Ausführungsform ist das Anschlusselement einstückig und besteht bevorzugt aus einem elastisch verformbaren, insbesondere faserverstärkten, Kunststoff, besonders bevorzugt aus einem, insbesondere glasfaserverstärkten, Polyamid. Ein derartiger Kunststoff ist leicht und einfach herzustellen (z. B. durch Spritzguss). Ein faserverstärkter Kunststoff hält in Faserrichtung einer hohen Zugbelastung und Druckbelastung stand und bleibt quer zur Faserrichtung biegsam.

In einer weiteren Ausführungsform umfasst das Anschlusselement einen Kopplungsbereich, bevorzugt eine Kugelpfanne, einen Kugelzapfen, eine Öse oder einen Bolzen, zur zugbelastbaren und druckbelastbaren, bevorzugt um zumindest eine Drehachse drehbaren, Kopplung mit einem zu dem Kopplungsbereich komplementär geformten Kopplungselement, bevorzugt einer Kugelpfanne, einem Kugelzapfen, einer Öse oder einem Bolzen, des Bauteils. Dies ermöglicht den Anschluss des Aggregats über das Anschlusselement an ein Bauteil (z. B. eine Heckklappe) mit einem einzigen (bevorzugt einstückigen) Anschlusselement. Somit umfasst das Aggregat wenige Einzelteile und die Konstruktion ist einfach und kostengünstig.

Ein erfindungsgemäßes Aggregat ist entlang einer Längsachse längenverstellbar und ist als Gasdruckfeder, Hydraulikdämpfer, Linearantrieb, Spindelantrieb, oder Federbein ausgestaltet.

Das Aggregat ist mit zumindest einem Anschlusselement zum zugbelastbaren und druckbelastbaren Anschluss des Aggregats an ein Bauteil, beispielsweise eine Karosserie oder eine Klappe eines Fahrzeugs, ausgestattet.

Das Anschlusselement ist auf einen axialen Endabschnitt bezüglich der Längsachse des Aggregats aufgesteckt, wobei das Anschlusselement zumindest einen in einer Montagekonfiguration des Anschlusselements zum Aufstecken auf den Endabschnitt bezüglich der Längsachse nach außen elastisch biegsamen Rastarm umfasst. Der Endabschnitt kann beispielsweise rohrförmig, insbesondere zylindrisch und/oder koaxial zur Längsachse ausgestaltet sein.

Der zumindest eine Rastarm umfasst zumindest ein Rastelement, wobei der Endabschnitt zumindest ein zu dem zumindest einen Rastelement komplementär geformtes Gegenrastelement umfasst, wobei das zumindest eine Rastelement mit dem zumindest einen Gegenrastelement in einer Betriebskonfiguration des Aggregats entlang der Längsachse formschlüssig zusammenwirkt.

Aus der erfindungsgemäßen Ausgestaltung des Aggregats ergeben sich die bereits zum erfindungsgemäßen Anschlusselement beschriebenen Vorteile und Ausgestaltungsmöglichkeiten.

Vorzugsweise wirkt das zumindest eine Rastelement mit dem zumindest einen Gegenrastelement in der Betriebskonfiguration des Aggregats um die Längsachse drehbar zusammen. Dazu kann das zumindest eine Gegenrastelement beispielsweise eine Drehsymmetrie um die Längsachse aufweisen. Vorzugsweise sind Rastelement und Gegenrastelement relativ zueinander um die Längsachse um 360° drehbar. Ein Beispiel dafür ist ein Gegenrastelement in Form einer umlaufenden Ringnut in die das / die Rastelement(e) einrasten, wobei eine relative Drehung des Anschlusselements zum Endabschnitt (bzw. dem Rest des Aggregats) möglich ist.

In einer bevorzugten Ausführungsform umfasst das zumindest eine Rastelement einen Vorsprung zum Eingriff in das als Vertiefung, bevorzugt als um die Längsachse umlaufende Ringnut, ausgestaltete Gegenrastelement. Diese Ausführungsform ermöglicht einen einfachen Zusammenbau und in unkomplizierter Weise eine relative Drehbarkeit von Rastelement und Gegenrastelement. Im Endabschnitt steht weiterhin in der Regel mehr Materialstärke und Bauraum zur Verfügung als im Rastarm. Es ist daher sicherer, platzsparender und einfacher herzustellen als eine Vertiefung im Anschlusselement.

Das Aggregat umfasst mindestens ein Sicherungselement, wobei das Sicherungselement dazu eingerichtet ist, ein Verbiegen des zumindest einen Rastarms des Anschlusselements bezüglich der Längsachse nach außen in der Betriebskonfiguration des Aggregats zu verhindern. Der Begriff "verhindern" ist hier so zu verstehen, dass sich der / die Rastarm(e) höchstens so wenig verbiegen lassen, dass der Formschluss zwischen Rastelement(en) und Gegenrastelement(en) entlang der Längsachse in der Betriebskonfiguration erhalten bleibt.

In einer Ausführungsform ist das Sicherungselement in der Betriebskonfiguration radial zur Längsachse außen von dem zumindest einen Rastarm, bevorzugt entlang der Längsachse, auf das Anschlusselement aufgesteckt oder in das Anschlusselement eingesteckt, wobei das Sicherungselement und das Anschlusselement in der Betriebskonfiguration bevorzugt entlang der Längsachse reibschlüssig und/oder radial zur Längsachse formschlüssig zusammenwirken. Dadurch kann der mindestens eine Rastarm in der Montagekonfiguration zur Montage des Anschlusselements auf den Endabschnitt elastisch aufgebogen werden. In der Betriebskonfiguration, also wenn das Sicherungselement in Position ist, kann der mindestens eine Rastarm nicht aufgebogen werden, und ist also gegen ein Lösen von Rastelement und Gegenrastelement voneinander gesichert.

Es ist bevorzugt, wenn das Anschlusselement zumindest einen in der Betriebskonfiguration radial zur Längsachse außen von dem Sicherungselement angeordneten Schutzabschnitt zum Schutz und bevorzugt zur entlang der Längsachse reibschlüssigen Halterung des Sicherungselements umfasst. Damit kann ein fester Sitz des Sicherungselements im Anschlusselement in der Betriebskonfiguration erreicht werden. Das Sicherungselement nimmt dann in der Betriebskonfiguration gewissermaßen den Raum ein, in den sich der oder die Rastarm(e) in der Montagekonfiguration nach radial außen elastisch verbiegen können.

Vorzugsweise ist das zumindest eine Sicherungselement und bevorzugt der zumindest eine Schutzabschnitt jeweils im Wesentlichen hohlzylinderförmig und/oder koaxial zur Längsachse angeordnet. Vorzugsweise sind das zumindest eine Sicherungselement und der zumindest eine Schutzabschnitt hohlzylinderförmig und koaxial zur Längsachse angeordnet. Diese Lösung ist einfach herzustellen und aufgrund der Rotationssymmetrie um die Längsachse einfach zu montieren und besonders stabil.

Erfindungsgemäß umfasst das Aggregat zumindest ein entlang der Längsachse wirkendes Federelement, wobei das Federelement das Sicherungselement in der Betriebskonfiguration des Aggregats entlang der Längsachse gegen das Anschlusselement vorspannt. Bevorzugt ist das Federelement eine Schraubendruckfeder. Das Federelement kann vorzugsweise ein an dem Aggregat ohnehin vorhandenes Federelement sein.

Bevorzugt umfasst das Aggregat zumindest ein, bevorzugt an dem Sicherungselement befestigtes oder einstückig mit dem Sicherungselement ausgestaltetes, Stützelement zur Abstützung des Sicherungselements an dem Endabschnitt und/oder an dem Federelement, wobei das zumindest eine Stützelement bevorzugt ringscheibenförmig und/oder koaxial zur Längsachse angeordnet ist und/oder radial zur Längsachse eine größere Breite hat als das Sicherungselement. Das Stützelement dient dabei als Führungshilfe zum Einführen des Sicherungselements in oder Aufstecken auf das Anschlusselement entlang der Längsachse. Eine ringscheibenförmige Ausgestaltung ist einfach in der Herstellung und stellt eine gleichmäßige Stabilisation bereit. Dadurch, dass das Stützelement radial zur Längsachse eine größere Breite hat als das Sicherungselement wird eine größere Auflagefläche für das Federelement bereitgestellt. Das Federelement wird damit stabilisiert und ein Abrutschen bei der Montage und im Betrieb wird verhindert.

Ein erfindungsgemäßes Verfahren zur Herstellung eines erfindungsgemäßen Aggregats umfasst folgende Schritte, insbesondere in der genannten Reihenfolge:
a) Bereitstellen des Endabschnitts des Aggregats,
b) Erzeugen zumindest eines Gegenrastelements an dem Endabschnitt und
c) Aufstecken des Anschlusselements des Aggregats entlang der Längsachse des Aggregats auf den Endabschnitt,
d) wobei der zumindest eine Rastarm des Anschlusselements während des Aufsteckens bezüglich der Längsachse nach außen gebogen wird, und
e) wobei sich der zumindest eine Rastarm am Ende des Aufsteckens elastisch auf die Längsachse zu zurückbiegt, sodass das zumindest eine Rastelement des zumindest einen Rastarms entlang der Längsachse formschlüssig mit dem zumindest einen Gegenrastelement zusammenwirkt.

Das Erzeugen des, beispielsweise als Ringnut um die Längsachse des Aggregats ausgebildeten, Gegenrastelements umfasst vorzugsweise ein Umformen des Endabschnitts, beispielsweise eine Kalt-Umformen, insbesondere ein Sicken.

Zumindest ein Sicherungselement wird an dem Anschlusselement angebracht, sodass das Sicherungselement ein Verbiegen des zumindest einen Rastarms bezüglich der Längsachse nach außen verhindert. Durch das Anbringen des Sicherungselements wird der Übergang von der Montagekonfiguration in die Betriebskonfiguration des Aggregats erreicht.

Es ist bevorzugt, wenn das Anbringen des zumindest einen Sicherungselements ein Einstecken des Sicherungselements in das Anschlusselement oder ein Aufstecken des Sicherungselements auf das Anschlusselement entlang der Längsachse umfasst. Ein Einstecken des Sicherungselements in das Anschlusselement kann beispielsweise in eine Ausnehmung des Anschlusselements radial außerhalb des Rastarms / der Rastarme und radial innerhalb des Schutzabschnitts (sofern vorhanden) erfolgen. Falls kein Schutzabschnitt vorgesehen ist, erfolgt bevorzugt ein Aufstecken des Sicherungselements.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt einen Längsschnitt eines erfindungsgemäßen Aggregats.
Figur 2 zeigt einen Querschnitt eines erfindungsgemäßen Anschlusselements.

### Fig.1

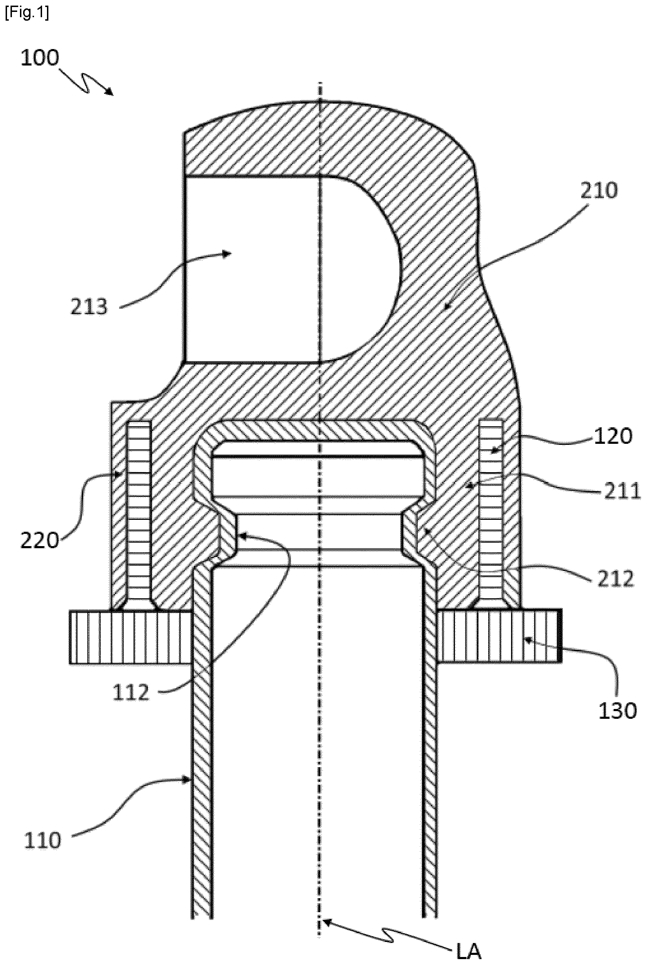

Figur 1 zeigt einen Längsschnitt eines erfindungsgemäßen Aggregats 100, beispielsweise eines Spindelantriebs, entlang seiner Längsachse LA.

Das Aggregat 100 umfasst ein erfindungsgemäßes Anschlusselement 210 zum zugbelastbaren und druckbelastbaren Anschluss des Aggregats 100 an ein Bauteil, beispielsweise an eine Karosserie eines Fahrzeugs (nicht dargestellt).

Das Aggregat 100 umfasst einen Kopplungsbereich 213, beispielsweise eine Kugelpfanne, zur zugbelastbaren und druckbelastbaren, bevorzugt um zumindest eine Drehachse, beispielsweise quer zur Längsachse LA, drehbaren, Kopplung mit einem zu dem Kopplungsbereich 213 komplementär geformten Kopplungselement (nicht gezeigt), beispielsweise einem Kugelzapfen, des Bauteils.

Das Anschlusselement 210 ist auf einen axialen Endabschnitt 110 bezüglich der Längsachse LA des Aggregats 100 aufgesteckt. Der Endabschnitt 110 ist beispielsweise als im Wesentlichen zylindrisches und zur Längsachse LA koaxiales Rohr ausgestaltet.

Das Anschlusselement 210 umfasst zumindest einen in einer (nicht gezeigten) Montagekonfiguration des Anschlusselements 210 zum Aufstecken auf den Endabschnitt 110 bezüglich der Längsachse A nach außen elastisch biegsamen Rastarm 211, wobei der zumindest eine Rastarm 211 zumindest ein Rastelement 212, beispielsweise eine Rastnase, umfasst.

Der Endabschnitt 110 umfasst ein zu dem zumindest einen Rastelement 212 komplementär geformtes Gegenrastelement 112, beispielsweise eine um die Längsachse LA umlaufende Ringnut.

Das zumindest eine Rastelement 212 wirkt mit dem zumindest einen Gegenrastelement 112 in einer in Figur 1 gezeigten Betriebskonfiguration des Aggregats 100 entlang der Längsachse A formschlüssig und vorzugsweise um die Längsachse LA drehbar zusammen.

Das gezeigte Anschlusselement umfasst ein Sicherungselement 120, das dazu eingerichtet ist, ein Verbiegen des zumindest einen Rastarms 211 des Anschlusselements 210 bezüglich der Längsachse LA nach außen in der Betriebskonfiguration des Aggregats 100 zu verhindern.

Das, beispielsweise als Zylinderhülse ausgestaltete, Sicherungselement 120 ist in der gezeigte Betriebskonfiguration radial zur Längsachse LA außen von dem zumindest einen Rastarm 111, insbesondere koaxial zur Längsachse LA, in das Anschlusselement 210 eingesteckt, wobei das Sicherungselement 120 und das Anschlusselement 210 beispielsweise in der Betriebskonfiguration entlang der Längsachse LA reibschlüssig und radial zur Längsachse LA formschlüssig zusammenwirken.

Das Anschlusselement 210 umfasst einen in der Betriebskonfiguration radial zur Längsachse LA außen von dem Sicherungselement 120 angeordneten Schutzabschnitt 220 zum Schutz und bevorzugt zur entlang der Längsachse LA reibschlüssigen Halterung des Sicherungselements 120.

Das Aggregat 100 umfasst ein Stützelement 130 zur Abstützung des Sicherungselements 120 an dem Endabschnitt 110, wobei das Stützelement 130 bevorzugt ringscheibenförmig und koaxial zur Längsachse LA angeordnet ist und radial zur Längsachse LA eine größere Breite hat als das Sicherungselement 120.

### Fig.2

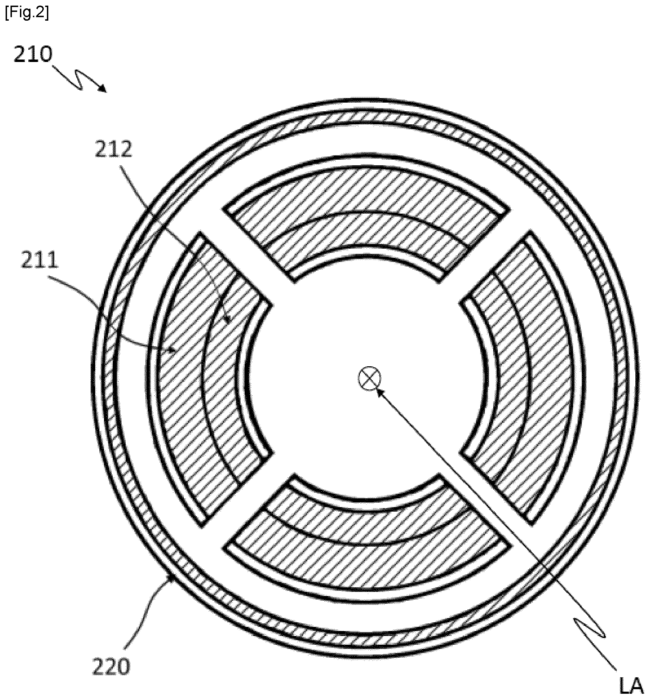

Figur 2 zeigt einen Querschnitt eines erfindungsgemäßen Anschlusselements 210 quer zur Längsachse LA.

Das Anschlusselement 210 kann beispielsweise so wie das in Figur 1 gezeigte Anschlusselement 210 ausgestaltet sein.

Das Anschlusselement 210 umfasst beispielsweise vier gleichmäßig um die Längsachse LA verteilte Rastarme 211 mit jeweils einem Rastelement 212.

Das Anschlusselement 210 umfasst einen, beispielsweise zylindrischen und koaxial zur Längsachse LA außerhalb der Rastarme 211 angeordneten Schutzabschnitt 220.

### Liste der Bezugszeichen

| | | | |
|---|---|---|---|
| 100 | Aggregat | 210 | Anschlusselement |
| 110 | Endabschnitt | 211 | Rastarm |
| 112 | Gegenrastelement | 212 | Rastelement |
| 120 | Sicherungselement | 213 | Kopplungsbereich |
| 130 | Stützelement | 220 | Schutzabschnitt |
| | | LA | Längsachse |

## Patentansprüche

1. Aggregat (100), das entlang einer Längsachse (LA) längenverstellbar ist, wobei das Aggregat (100) als Gasdruckfeder, Hydraulikdämpfer,
Linearantrieb oder Federbein ausgestaltet ist,
a) umfassend zumindest ein Anschlusselement (210) zum zugbelastbaren und druckbelastbaren Anschluss des Aggregats (100) an ein Bauteil,
b) wobei das zumindest eine Anschlusselement (210) auf einen axialen Endabschnitt (110) bezüglich der Längsachse (LA) des Aggregats (100) aufgesteckt ist,
c) wobei das zumindest eine Anschlusselement (210) zumindest einen Rastarm (211) umfasst,
d) wobei der zumindest eine Rastarm (211) zumindest ein Rastelement (212) umfasst,
e) wobei der Endabschnitt (110) zumindest ein zu dem zumindest einen Rastelement (212) komplementär geformtes Gegenrastelement (112) umfasst,
f) wobei das zumindest eine Rastelement (212) mit dem zumindest einen Gegenrastelement (112) in einer Betriebskonfiguration des Aggregats (100) entlang der Längsachse (LA) formschlüssig zusammenwirkt,
g) wobei das Aggregat (100) zumindest ein entlang der Längsachse (LA) wirkendes Federelement umfasst,
**dadurch gekennzeichnet, dass**
h) der zumindest eine Rastarm (211) in einer Montagekonfiguration des Anschlusselements (210) zum Aufstecken auf den Endabschnitt (110) bezüglich der Längsachse (LA) nach außen elastisch biegsam ist,
i) wobei das Aggregat (100) zumindest ein Sicherungselement (120) umfasst,
j) wobei das Sicherungselement (120) dazu eingerichtet ist, ein Verbiegen des zumindest einen Rastarms (211) des zumindest einen Anschlusselements (210) bezüglich der Längsachse (LA) nach außen in der Betriebskonfiguration des Aggregats (100) zu verhindern,
k) wobei das Federelement das zumindest eine Sicherungselement (120) in der Betriebskonfiguration des Aggregats (100) entlang der Längsachse (LA) gegen das Anschlusselement (210) vorspannt.

2. Aggregat (100) nach Anspruch 1,
**dadurch gekennzeichnet, dass**
das Anschlusselement (210) einstückig ist und aus einem elastisch verformbaren, faserverstärkten, Kunststoff besteht.

3. Aggregat (100) nach Anspruch 1 oder 2,
**dadurch gekennzeichnet, dass**
das Anschlusselement (210) einen Kopplungsbereich (213) umfasst, ausgewählt aus einer Kugelpfanne, einem Kugelzapfen, einer Öse und einem Bolzen, zur zugbelastbaren und druckbelastbaren, um zumindest eine Drehachse drehbaren, Kopplung mit einem zu dem Kopplungsbereich (213) komplementär geformten Kopplungselement, ausgewählt aus einer Kugelpfanne, einem Kugelzapfen, einer Öse und einem Bolzen, des Bauteils.

4. Aggregat (100) nach einem der Ansprüche 1 bis 3,
**dadurch gekennzeichnet, dass**
das zumindest eine Rastelement (212) mit dem zumindest einen Gegenrastelement (112) in der Betriebskonfiguration des Aggregats (100) um die Längsachse (LA) drehbar zusammenwirkt.

5. Aggregat (100) nach einem der Ansprüche 1 bis 4,
**dadurch gekennzeichnet, dass**
das zumindest eine Rastelement (212) einen Vorsprung zum Eingriff in das als um die Längsachse (LA) umlaufende Ringnut ausgestaltete Gegenrastelement (112) umfasst.

6. Aggregat (100) nach einem der Ansprüche 1 bis 5,
**dadurch gekennzeichnet, dass**
a) das zumindest eine Sicherungselement (120) in der Betriebskonfiguration radial zur Längsachse (LA) außen von dem zumindest einen Rastarm (211) entlang der Längsachse (LA) auf das zumindest eine Anschlusselement (210) aufgesteckt oder in das Anschlusselement (210) eingesteckt ist,
b) wobei das zumindest eine Sicherungselement (120) und das zumindest eine Anschlusselement (210) in der Betriebskonfiguration entlang der Längsachse (LA) reibschlüssig zusammenwirken.

7. Aggregat (100) nach Anspruch 6,
**dadurch gekennzeichnet, dass**
das zumindest eine Anschlusselement (210) zumindest einen in der Betriebskonfiguration radial zur Längsachse (LA) außen von dem zumindest einen Sicherungselement (120) angeordneten Schutzabschnitt (220) zum Schutz und zur entlang der Längsachse (LA) reibschlüssigen Halterung des zumindest einen Sicherungselements (120) umfasst.

8. Aggregat (100) nach Anspruch 7,
**dadurch gekennzeichnet, dass**
das zumindest eine Sicherungselement (120) und der zumindest eine Schutzabschnitt (220) jeweils im Wesentlichen hohlzylinderförmig ist.

9. Aggregat (100) nach einem der Ansprüche 1 bis 8,
**gekennzeichnet durch**
a) zumindest ein Stützelement (130) zur Abstützung des zumindest einen Sicherungselements (120) an dem zumindest einen Federelement,
b) wobei das zumindest eine Stützelement (130) ringscheibenförmig und/oder koaxial zur Längsachse (LA) angeordnet ist und/oder radial zur Längsachse (LA) eine größere Breite hat als das zumindest eine Sicherungselement (120).

10. Verfahren zur Herstellung eines Aggregats (100) nach einem der Ansprüche 1 bis 9,
**gekennzeichnet durch folgende Schritte:**
a) Bereitstellen des Endabschnitts (110) des Aggregats (100),
b) Erzeugen zumindest eines Gegenrastelements (112) an dem Endabschnitt (110) und
c) Aufstecken des Anschlusselements (210) des Aggregats (100) entlang der Längsachse (LA) des Aggregats (100) auf den Endabschnitt (110),
d) wobei der zumindest eine Rastarm (211) des Anschlusselements (210) während des Aufsteckens bezüglich der Längsachse (LA) nach außen gebogen wird, und
e) wobei sich der zumindest eine Rastarm (211) am Ende des Aufsteckens elastisch auf die Längsachse (LA) zu zurückbiegt, sodass das zumindest eine Rastelement (212) des zumindest einen Rastarms (211) entlang der Längsachse (LA) formschlüssig mit dem zumindest einen Gegenrastelement (112) zusammenwirkt
f) Anbringen zumindest eines Sicherungselements (120) an dem Anschlusselement (210), sodass das Sicherungselement (120) ein Verbiegen des zumindest einen Rastarms (211) bezüglich der Längsachse (LA) nach außen verhindert,
g) Anbringen zumindest eines entlang der Längsachse (LA) wirkenden Federelements an dem Aggregat, sodass das Federelement das zumindest eine Sicherungselement (120) in der Betriebskonfiguration des Aggregats (100) entlang der Längsachse (LA) gegen das Anschlusselement (210) vorspannt.

11. Verfahren nach Anspruch 10,
**dadurch gekennzeichnet, dass**
das Anbringen des zumindest einen Sicherungselements (120) ein Einstecken des Sicherungselements (120) in das Anschlusselement (210) oder ein Aufstecken des Sicherungselements (120) auf das Anschlusselement (210) entlang der Längsachse (LA) umfasst.

## Claims

1. An assembly (100) which is adjustable in length along a longitudinal axis (LA), wherein the assembly (100) is designed as a gas pressure spring, as a hydraulic damper, as a linear drive or as a spring strut,
a. comprising at least one connecting element (210) for the connection of the assembly (100) to a component in such a way that the connection can be subjected to tensile loads and compressive loads,
b. the at least one connecting element (210) being plugged onto an axial end section (110) with respect to the longitudinal axis (LA) of the assembly (100),
c. the at least one connecting element (210) comprising at least one latching arm (211),
d. the at least one latching arm (211) comprising at least one latching element (212),
e. wherein the end portion (110) comprises at least one mating latching element (112) of complementary shape to the at least one latching element (212),
f. wherein the at least one latching element (212) positively cooperates with the at least one mating latching element (112) along the longitudinal axis (LA) in an operating configuration of the assembly (100),
g. wherein the assembly (100) comprises at least one spring element acting along the longitudinal axis (LA),
**characterised in that**
h. the at least one latching arm (211) is elastically bendable outwards with respect to the longitudinal axis (LA) in a mounting configuration of the connecting element (210) for plugging onto the end section (110),
i. the assembly (100) comprising at least one securing element (120),
j. the securing element (120) being set up to prevent the at least one latching arm (211) of the at least one connecting element (210) from bending outwards with respect to the longitudinal axis (LA) in the operating configuration of the assembly (100)
k. the spring element biasing the at least one securing element (120) against the connecting element (210) along the longitudinal axis (LA) in the operating configuration of the assembly (100).

2. The assembly (100) according to claim 1,
**characterised in that**
the connecting element (210) is in one piece and consists of an elastically deformable, fibre-reinforced plastic.

3. The assembly (100) according to claim 1 or 2,
**characterised in that**
a. the connecting element (210) comprises a coupling region (213) selected from a ball socket, a ball pin, an eye and a bolt, for coupling to a coupling element of the component,
b. the coupling element being of complementary shape to the coupling region (213) and being selected from a ball socket, a ball pin, an eye and a bolt,
c. wherein the coupling connection can be loaded in tension and in compression and can be rotated about at least one axis of rotation.

4. The assembly (100) according to any one of claims 1 to 3,
**characterized in that**
the at least one latching element (212) cooperates with the at least one counterlatching element (112) in a rotatable manner about the longitudinal axis (LA) in the operating configuration of the assembly (100).

5. The assembly (100) according to one of claims 1 to 4,
**characterised in that**
the at least one latching element (212) comprises a projection for engagement in the mating latching element (112) configured as an annular groove extending around the longitudinal axis (LA).

6. The assembly (100) according to any one of claims 1 to 5,
**characterised in that**
a. the at least one securing element (120) is fitted along the longitudinal axis (LA) on the outside of the at least one latching arm (211) radially to the longitudinal axis (LA) onto the at least one connecting element (210) or is inserted along the longitudinal axis (LA) into the connecting element (210) in the operating configuration,
b. wherein the at least one securing element (120) and the at least one connecting element (210) cooperate in a frictionally locking manner along the longitudinal axis (LA) in the operating configuration.

7. The assembly (100) according to claim 6,
**characterised in that**
the at least one connection element (210) comprises at least one protective section (220) arranged outside the at least one securing element (120) radially to the longitudinal axis (LA) in the operating configuration for protecting the at least one securing element (120) and frictionally retaining the at least one securing element (120) along the longitudinal axis (LA).

8. The assembly (100) according to claim 7,
**characterised in that**
the at least one securing element (120) and the at least one protective section (220) are each substantially hollow cylindrical.

9. The assembly (100) according to one of claims 1 to 8,
**characterised by**
a. at least one support element (130) for supporting the at least one securing element (120) on the at least one spring element,
b. wherein the at least one support element (130) is arranged in the shape of an annular disc and/or coaxially to the longitudinal axis (LA) and/or has a greater width radially to the longitudinal axis (LA) than the at least one securing element (120).

10. A method of manufacturing an assembly (100) according to any one of claims 1 to 9,
**characterised by the following steps:**
a. providing the end section (110) of the assembly (100),
b. producing at least one mating latching element (112) on the end section (110), and
c. plugging the connection element (210) of the assembly (100) onto the end section (110) along the longitudinal axis (LA) of the assembly (100),
d. wherein the at least one latching arm (211) of the connection element (210) is bent outwards with respect to the longitudinal axis (LA) during the step of plugging-on, and
e. wherein the at least one latching arm (211) elastically bends back towards the longitudinal axis (LA) at the end of the step of plugging-on, so that the at least one latching element (212) of the at least one latching arm (211) cooperates positively with the at least one mating latching element (112) along the longitudinal axis (LA), and
f. attaching at least one securing element (120) to the connection element (210) so that the securing element (120) prevents the at least one latching arm (211) from bending outwards with respect to the longitudinal axis (LA), and
g. attaching at least one spring element acting along the longitudinal axis (LA) to the assembly so that the spring element biases the at least one securing element (120) against the connecting element (210) along the longitudinal axis (LA) in the operating configuration of the assembly (100).

11. The method according to claim 10,
**characterized in that**
the attaching of the at least one securing element (120) comprises a plugging of the securing element (120) into the connecting element (210) or a plugging of the securing element (120) onto the connecting element (210) along the longitudinal axis (LA).

## Revendications

1. Unité (100) réglable en longueur selon un axe longitudinal (LA), l'unité (100) étant conçue comme ressort à pression de gaz, comme amortisseur hydraulique, comme entrainement linéaire ou comme jambe de force,
a) comprenant au moins un élément de connexion (210) pour la connexion de l'unité (100) à un composant pouvant supporter des efforts de traction et de pression,
b) l'au moins un élément de connexion (210) étant enfiché sur une extrémité (110) axiale de l'unité (100) par rapport à l'axe longitudinal (LA),
c) l'au moins un élément de connexion (210) comprenant au moins un bras d'encliquetage (211),
d) l'au moins un bras d'encliquetage (211) comprenant au moins un élément d'encliquetage (212),
e) l'extrémité (110) comprenant au moins un élément de contre-encliquetage (112) étant conformé de manière complémentaire à l'au moins un élément d'encliquetage (212),
f) l'au moins un élément d'encliquetage (212) coopérant positivement le long de l'axe longitudinal (LA) avec l'au moins un élément de contre-encliquetage (112) dans une configuration de fonctionnement de l'unité (100),
g) l'unité comprenant au moins un élément ressort agissant le long de l'axe longitudinal (LA),
**caractérisé en ce que**
h) l'au moins un bras d'encliquetage (211) est élastiquement flexible vers l'extérieur par rapport à l'axe longitudinal (LA) dans une configuration d'assemblage de l'élément de connexion (210) pour enfichage sur l'extrémité (110),
i) l'unité (100) comprenant au moins un élément de fixation (120),
j) l'élément de fixation (120) étant agencé pour empêcher l'au moins un bras d'encliquetage (211) du au moins un élément de connexion (210) de fléchir vers l'extérieur par rapport à l'axe longitudinal (LA) dans la configuration de fonctionnement de l'unité (100),
k) l'élément ressort précontraignant l'au moins un élément de fixation (120) dans la configuration de fonctionnement de l'ensemble (100) le long de l'axe longitudinal (LA) contre l'élément de connexion (210).

2. Unité (100) selon la revendication 1,
**caractérisé en ce que**
l'élément de connexion (210) est monobloc et est constitué d'une matière plastique élastiquement déformable et renforcée de fibres.

3. Unité (100) selon la revendication 1 ou 2,
**caractérisé en ce que**
l'élément de connexion (210) comprend une zone d'accouplement (213), choisie parmi une douille sphérique, une goupille sphérique, un oeillet et un boulon,
la zone d'accouplement se couplant pour la charge de traction et de pression et de manière à pouvoir tourner autour d'au moins un axe de rotation avec un élément d'accouplement du composant,
l'élément d'accouplement étant choisi parmi une douille sphérique, une goupille sphérique, un oeillet et un boulon, et
l'élément d'accouplement étant conformé de manière complémentaire à la zone d'accouplement (213).

4. Unité (100) selon l'une quelconque des revendications 1 à 3,
**caractérisé en ce que**
l'au moins un élément d'encliquetage (212) coopère avec l'au moins un élément de contre-encliquetage (112) dans la configuration de fonctionnement de l'unité (100) de manière à pouvoir tourner autour de l'axe longitudinal (LA).

5. Unité (100) selon l'une quelconque des revendications 1 à 4,
**caractérisé en ce que**
l'au moins un élément d'encliquetage (212) comprend une saillie d'engagement dans l'élément de contre-encliquetage (112) réalisée sous la forme d'une rainure annulaire s'étendant autour de l'axe longitudinal (LA).

6. Unité (100) selon l'une quelconque des revendications 1 à 5,
**caractérisé en ce que**
a) l'au moins un élément de fixation (120) est placé le long de l'axe longitudinal (LA) à l'extérieur de l'au moins un bras d'encliquetage (211) radialement à l'axe longitudinal (LA) sur l'au moins un élément de connexion (210) ou est inséré le long de l'axe longitudinal (LA) dans l'élément de connexion (210) dans la configuration de fonctionnement,
b) l'au moins un élément de fixation (120) et l'au moins un élément de connexion (210) coopèrent par engagement par friction le long de l'axe longitudinal (LA) dans la configuration de fonctionnement.

7. Unité (100) selon la revendication 6,
**caractérisé en ce que**
l'au moins un élément de connexion (210) comprend au moins une section de protection (220), qui est disposée radialement à l'axe longitudinal (LA) à l'extérieur de l'au moins un élément de fixation (120) dans la configuration de fonctionnement, pour protéger et pour maintenir par friction l'au moins un élément de fixation (120).

8. Unité (100) selon la revendication 7,
**caractérisé en ce que**
l'au moins un élément de fixation (120) et l'au moins une section de protection (220) se présentent chacun essentiellement sous la forme d'un cylindre creux.

9. Unité (100) selon l'une quelconque des revendications 1 à 8,
**caractérisé par**
a) au moins un élément de support (130) pour supporter l'au moins un élément de fixation (120) sur l'au moins un élément ressort,
b) l'au moins un élément de support (130) étant agencé sous la forme d'un disque annulaire et/ou coaxialement par rapport à l'axe longitudinal (LA) et/ou ayant une plus grande largeur radialement par rapport à l'axe longitudinal (LA) que l'au moins un élément de fixation (120).

10. Procédé de fabrication d'une unité (100) selon l'une quelconque des revendications 1 à 9,
**caractérisé par** les étapes suivantes :
a) fournir l'extrémité (110) de l'unité (100),
b) réaliser au moins un élément de contre-encliquetage (112) sur l'extrémité (110) et
c) enficher l'élément de connexion (210) de l'unité (100) selon l'axe longitudinal (LA) de l'unité (100) sur l'extrémité (110),
d) l'au moins un bras d'encliquetage (211) de l'élément de connexion (210) étant fléchi vers l'extérieur par rapport à l'axe longitudinal (LA) lors de l'enfichement, et
e) l'au moins un bras d'encliquetage (211) se réfléchissant élastiquement vers l'axe longitudinal (LA) en fin de l'enfichement, de sorte que l'au moins un élément d'encliquetage (212) de l'au moins un bras d'encliquetage (211) coopère positivement avec l'au moins un élément de contre-encliquetage (112) le long de l'axe longitudinal (LA),
f) fixer au moins un élément de fixation (120) à l'élément de connexion (210), de sorte que l'élément de fixation (120) empêche l'au moins un bras d'encliquetage (211) de fléchir vers l'extérieur par rapport à l'axe longitudinal (LA),
g) fixer au moins un élément ressort agissant selon l'axe longitudinal (LA) à l'unité (100), de sorte que l'élément ressort précontraigne le au moins un élément de fixation (120) dans la configuration de fonctionnement de l'unité (100) selon l'axe longitudinal (LA) contre l'élément de connexion (210).

11. Procédé selon la revendication 10,
**caractérisé en ce que**
la fixation de l'au moins un élément de fixation (120) comprend l'enfichage de l'élément de fixation (120) dans l'élément de connexion (210) ou l'enfichage de l'élément de fixation (120) sur l'élément de connexion (210) le long de l'axe longitudinal (LA).
